(19) Europäisches Patentamt
European Patent Office
Office européen des brevets

(11) **EP 4 491 469 B1**

(12) **EUROPEAN PATENT SPECIFICATION**

(45) Date of publication and mention
of the grant of the patent:
**08.04.2026  Bulletin 2026/15**

(21) Application number: **24187297.7**

(22) Date of filing: **09.07.2024**

(51) International Patent Classification (IPC):
***B60T 13/66*** *(2006.01)*        ***B60T 8/17*** *(2006.01)*
***B60T 17/22*** *(2006.01)*

(52) Cooperative Patent Classification (CPC):
**B60T 17/228; B60T 8/1705; B60T 13/665**

(54) **BRAKING SYSTEM FOR AT LEAST ONE VEHICLE, SYSTEM AND METHOD FOR CALIBRATING A BRAKING SYSTEM OF AT LEAST ONE VEHICLE, AND VEHICLE**

BREMSSYSTEM FÜR MINDESTENS EIN FAHRZEUG, SYSTEM UND VERFAHREN ZUM KALIBRIEREN EINES BREMSSYSTEMS VON MINDESTENS EINEM FAHRZEUG UND FAHRZEUG

SYSTEME DE FREINAGE POUR AU MOINS UN VEHICULE, SYSTEME ET PROCEDE D'ETALONNAGE D'UN SYSTEME DE FREINAGE D'AU MOINS UN VEHICULE, ET VEHICULE

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **11.07.2023  IT 202300014490**

(43) Date of publication of application:
**15.01.2025  Bulletin 2025/03**

(73) Proprietor: **Faiveley Transport Italia S.p.A.
10045 Piossasco (TO) (IT)**

(72) Inventor: **PICCIONE, Paolo Pietro
I-10141 TORINO (IT)**

(74) Representative: **Cristinelli, Luca et al
Jacobacci & Partners S.p.A.
Corso Emilia, 8
10152 Torino (IT)**

(56) References cited:
**US-A- 5 201 834    US-A1- 2009 255 329**

## Description

Technical Sector

This invention falls within the automotive industry in general; the invention particularly relates to a braking system for at least one vehicle, a system for calibrating a braking system of at least one vehicle, a method for calibrating a braking system of at least one vehicle and a vehicle.

Prior art

The prior art will be described below with main reference to the railway vehicle sector. However, what is described below can also be applied similarly to vehicles in other sectors.

In braking systems for railway vehicles, the calibration (tuning) of braking parameters during dynamic field tests is a known technique. This tuning is done before the vehicle is put into service.

The tuning of braking parameters has the aim of making the vehicle's braking performance meet design performance requirements, such as average deceleration, instantaneous deceleration and stopping distances.

In particular, tuning involves different types of braking: service braking, emergency braking, rescue braking and other possible types of braking that use the braking system as a means of applying brakes in a railway vehicle.

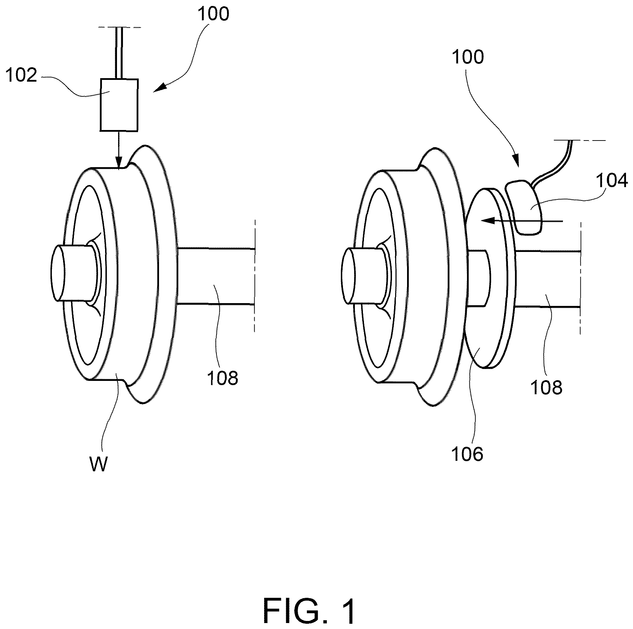

For example, the braking system may be a pneumatic or electropneumatic braking system, which can stop/slow down the vehicle by actuating braking means. As can be seen in Figure 1, the braking means 100 can include for example at least one braking application element, also called "friction lining". The braking application element can be for example a shoe 102, in the case of a system that uses the "shoe" brake, or a brake pad 104, in the case of a system that uses the "disc" brake.

The braking element can be suitably pushed, by means of pneumatic pressure acting on a piston that implements the braking force, onto a specific element, such as a brake disc 106, in the case of a system that uses the "disc" brake, or a wheel W, in the case of a system that uses the "shoe" brake.

Such a braking element may be pushed, by the aforementioned pneumatic pressure, onto the disc or wheel, so as to produce a braking force by means of the known friction phenomenon, caused by the sliding between bodies in relative motion. The bodies in relative motion are therefore the braking application element, for example attached to the railway bogie, and the brake disc (in the case of a disc brake) or the wheel attached to a rotating railway axle 108.

One of the above braking parameters concerns specifically the friction value between said braking means and the wheel or disc.

In the known technique, the tuning of this parameter is carried out through manual modification, by qualified and authorized personnel, of the friction value residing in braking software/control means during dynamic testing of the vehicle. A similar tuning procedure can also be envisaged for the other braking parameters. The aforementioned friction value between the braking means and the disc or wheel can also impact other braking parameters directly connected to it.

It is known that the modification of said braking parameters has a direct effect on the braking pressure that acts inside pistons residing in cylinders, called brake cylinders of the braking means. The pistons, driven by said braking pressure, act on the braking application elements, which are then pushed onto the discs or wheels of the railway vehicle, producing a braking force, responsible for slowing down and consequent stopping of the railway vehicle.

The aforementioned tuning of the braking parameters during dynamic tests of a railway vehicle has the main limitation of using a manual procedure in the definition of the braking parameters by the appointed competent personnel. The consequent impact is defined by the risk of human error due to the manual nature of the procedure, together with greater time spent in the tuning of braking parameters.

In addition, calibration parameters should be reviewed during the life of the vehicle due to wear of the braking means. However, since the above tuning procedures are not automated but require specific manual testing performed in the field, should these braking parameters need to be recalibrated, the vehicle must be taken out of service. US2009/255329 A1 is describing an example of a state of the art, and discloses a train BBW slack adjuster system, -method and -train.

Summary of the Invention

It is an objective of this invention to provide a solution that allows a reduction in the time required for calibration of the braking parameter relating to the friction value between the braking means and at least one wheel or at least one disc associated with the wheel or axle of the vehicle.

A further objective of this invention is to provide a solution that reduces the time spent in calibrating the braking parameter relating to the friction value between the braking means and at least one wheel or at least one disc associated with the wheel or axle.

A further objective of this invention is to provide a solution that allows automated tuning of the braking parameter relating to the friction value between the braking means and at least one wheel or at least one disc associated with the wheel or axle, even after commissioning of the vehicle.

These and other purposes and benefits are achieved, according to one aspect of the invention, by a braking system having the features defined in Claim 1, by a system for calibrating a braking system of at least one vehicle having the features defined in Claim 12, by a method for calibrating a braking system of at least one vehicle having the features defined in Claim 14 and by a vehicle having the features defined in Claim 16 or 17. Preferred embodiments of the invention are defined in the dependent claims, the content of which is understood to be an integral part of this description.

In summary, this invention is intended to replace, via an automated solution, the manual procedure of tuning the braking parameter relating to the friction value between the braking means and the wheel or disc associated with the wheel or axle.

Brief Description of the Drawings

The functional and structural features of some preferred embodiments of a braking system of at least one vehicle, a system for calibrating a braking system, a method for calibrating a braking system and a vehicle according to the invention will now be described. Reference is made to the accompanying drawings, in which:

- Figure 1 shows examples of braking means according to the prior art;
- Figure 2 shows a first embodiment of a braking system according to the invention;
- Figures 3a and 3b show respective illustrative embodiments, wherein the braking means comprises a plurality of braking application means;
- Figure 4 shows in detail an illustrative detachment condition C1 of the braking means and an illustrative contact condition C2 of the braking means;
- Figure 5 shows a further embodiment of a braking system according to the invention;
- Figure 6 shows an embodiment of a system for calibrating a braking system;
- Figure 7 shows a further embodiment of a system for calibrating a braking system.

Detailed Description

Before explaining in detail the plurality of embodiments of the invention, it should be clarified that the invention is not limited in its application to construction details and configuration of components presented in the following description or illustrated in the drawings. The invention is capable of taking on other embodiments and being practically implemented or realized in different ways. It should also be understood that phraseology and terminology are descriptive and should not be construed as limiting. The use of "include" and "comprise" and their variations is intended to include the elements stated below and their equivalents, as well as additional elements and their equivalents.

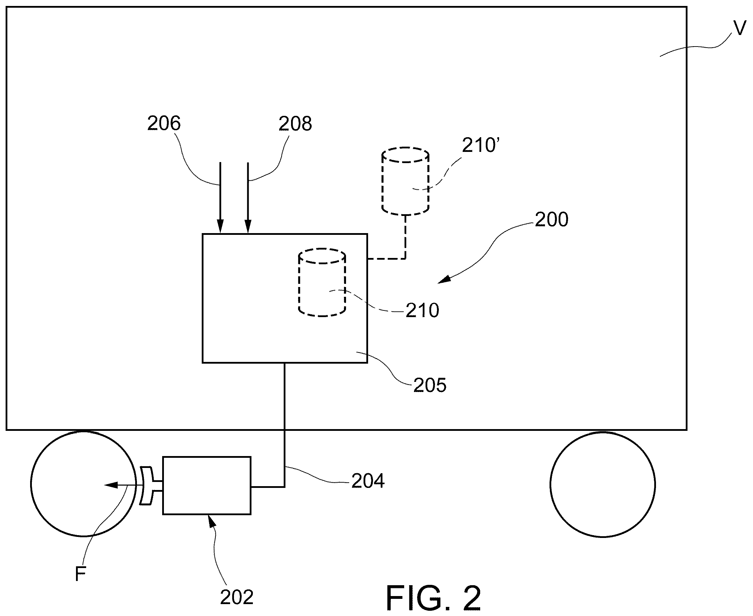

Referring initially to Figure 2, a first embodiment of a braking system for at least one vehicle, particularly at least one railway vehicle, is described below.

In this first embodiment, the braking system 200 comprises braking means 202 arranged to receive an actuation signal and to apply a corresponding braking force F to at least one wheel of said vehicle or at least one disc to which at least one wheel or axle of said vehicle is associated.

An intensity value of the braking force F applied by the braking means 202 is a function of a value of the actuation signal 204.

In other words, the intensity of the braking force F applied by the braking means 202 is a function of the value assumed by the actuation signal 204. For example, the greater the value assumed by the actuation signal 204, the greater the intensity of the braking force applied by the braking means, or vice-versa.

The braking system 200 further comprises control means 205.

For example, the control means 205 can be or comprise at least one of: a controller, a processor, a microprocessor, a microcontroller, at least one PLC, an FPGA, or the like.

The control means 205 are arranged to:

- receive a test braking request 206, indicative of an expected instantaneous deceleration value;
- determine the value of the actuation signal 204 which allows the braking means 202 to apply, to the at least one wheel or to the at least one disc, a braking force F having an intensity value such that said at least one vehicle would be decelerated according to said expected instantaneous deceleration value;
- actuate the braking means 202 according to the determined value of the actuation signal 204.

In other words, the determined value of the actuation signal 204 is the value that would cause said braking means 202 to apply to the at least one wheel or to the at least one disc, a braking force F having a value of intensity such that the at least one vehicle would be decelerated according to the expected instantaneous deceleration value.

The control means 205 are arranged to determine the value of the actuation signal 204 as a function of at least a predetermined expected friction value between the braking means 202 and the at least one wheel or the at least one disc, a test mass value of the at least one vehicle 208, the expected instantaneous deceleration value.

The predetermined expected friction value between the braking means 202 and the at least one wheel or the at least one disc is arranged to be stored in storage means 210 comprised in the control means 205 or storage means 210' associated with the control means 205.

The control means 205 are further arranged to:

a) determine a real instantaneous deceleration value of the vehicle during actuation of the braking means 202;

b) determine a real friction value between the braking means 202 and the at least one wheel or the at least one disc, depending at least on the real instantaneous deceleration value, the test mass value of the vehicle and the value of the actuation signal;

c) replace the predetermined expected friction value stored in the storage means 210, 210' with the determined real friction value.

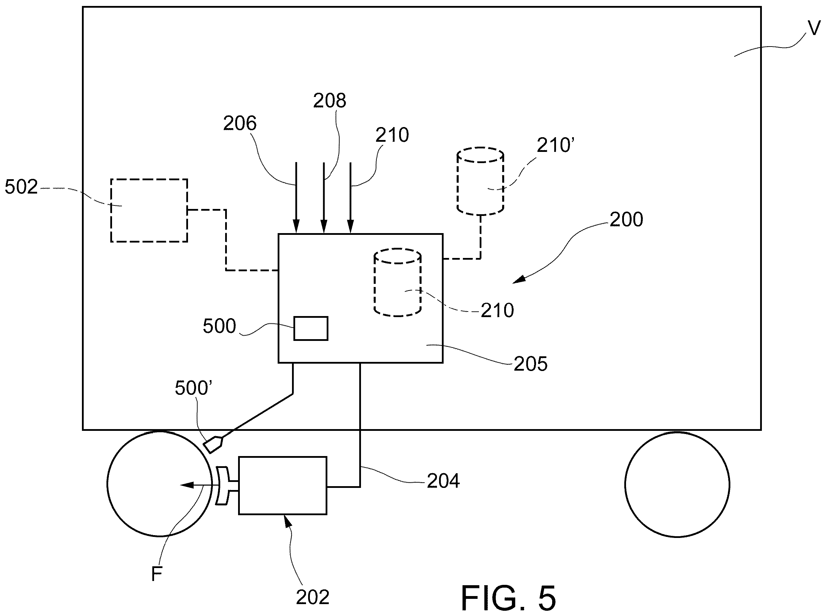

For example, to determine the real instantaneous deceleration value of the vehicle, the control means 205 can comprise or be associated with speed sensor means (see Figure 5: 500, 500') arranged to determine the actual forward speed of the vehicle. The speed sensor means can be or comprise, for example, at least one rotation sensor arranged to measure the rotational speed of a wheel or axle of the vehicle. Or, the control means 205 can be arranged to receive actual forward speed data from further control means external to the braking system.

With regard to the test mass value of the vehicle, the control means 205 can comprise or be associated with weighing means arranged to determine the mass of the vehicle. For example, the weighing means can determine the mass of the vehicle via deformation sensor means or by monitoring the vehicle suspension. Or, the control means 205 can receive mass data from further control means external to the braking system. Alternatively, the test mass value can be entered manually by a user, for example via a keyboard.

Due to the fact that at the end of the calibration procedure the predetermined stored expected friction value is replaced by the determined real friction value, the control means 205, when having to re-determine the value of the actuation signal 204 for the braking means 202, can take into account the determined real friction value and not the predetermined one (which was not consistent with the actual friction situation).

Preferably, the control means 205 can further be arranged to determine said value of the actuation signal 204 as a function of at least one predetermined test condition. In that case, the control means 205 can further be arranged to verify that at least one predetermined test condition is met.

Furthermore, the control means 205 can be arranged to perform the above steps a), b), and c) when the control means 205 determine that said at least one predetermined test condition is met.

Preferably, the at least one predetermined test condition can be a predetermined test forward speed. In that case, as already explained above and as for example observable in Figure 5, the control means 205 of the braking system 200 can comprise speed sensor means 500 or be associated with at least speed sensor means 500' arranged to measure the actual forward speed. Otherwise, the control means 205 of the braking system can be arranged to receive actual forward speed data from further control means 502 external to the braking system. Furthermore, the control means 205 can be arranged to determine that the predetermined test condition is met when the predetermined test forward speed and the actual forward speed are substantially coincident.

Preferably, the at least one predetermined test condition can be a predetermined test adhesion value between at least one wheel of the vehicle and a running surface. In that case, the control means 205 of the braking system can comprise adhesion determining means or be associated with adhesion determining means arranged to measure the actual adhesion value. Or, the control means 205 of the braking system can be arranged to receive an actual adhesion value between at least one wheel of the vehicle and a running surface from further control means external to the braking system. Furthermore, the control means can be arranged to determine that the predetermined test condition is met when the predetermined test adhesion value and the actual adhesion value are substantially coincident.

Preferably, the control means 205 can further be arranged to:

- receive a service braking request;
- actuate the braking means 202 via an actuation signal having a value determined as a function of said real friction value determined and adapted to make said braking means 202 apply a service braking force corresponding to the received service braking request.

In other words, following calibration of the determined real friction value, the control means 205 of the braking system 200 can take into account this calibrated real friction value for control of the service braking that will be performed by the braking system.

Alternatively or in addition, the control means 205 can further be arranged to:

- receive an emergency braking request;
- actuate said braking means 202 via an actuation signal 204 having a value determined as a function of the real friction value determined and adapted to make said braking means apply an emergency braking force corresponding to the received emergency braking request.

In other words, following calibration of the determined real friction value, the control means 205 of the braking system 200 can manage the actuation of the emergency braking that will be performed by the braking system. Emergency braking can also be managed according to the calibrated real friction value.

By way of non-limiting example, the control means 205 can be arranged to determine the real friction value between the braking means and the at least one wheel or the at least one disc, via the following formula:

$$\mu_{\text{reale}} = \frac{m * a_{\text{inst\_reale}}}{A_{sig}}$$

wherein $\mu_{\text{reale}}$ is the real friction value, m is the test mass value of that vehicle, $a_{\text{inst\_reale}}$ is the real instantaneous deceleration value, and $A_{sig}$ is the value of the actuation signal 204.

Similarly, the control means 205 can be arranged to determine the value of the actuation signal 204 via the following formula:

$$A_{sig} = \frac{m * a_{\text{test}}}{\mu_{pred}}$$

wherein $A_{sig}$ is the value of the actuation signal 204, m is the test mass value of that vehicle, $a_{\text{test}}$ is the expected instantaneous deceleration value and $\mu_{\text{pred}}$ is the predetermined expected friction value.

Preferably, the intensity value of the braking force F converted by the braking means can be dependent on a characterization parameter specific to said braking means.

In that case, the control means 205 can further be arranged to:

- determine the value of the actuation signal as a function also of the characterization parameter of said braking means;
- determine the real friction value between said braking means and said at least one wheel or said at least one disc, also depending on the characterization parameter specific to said braking means.

For example, the value assumed by the characterization parameter of the braking system can depend on one or more of the following characterizing factors:

- geometry of braking means;
- multiplicity of braking means;
- efficiency of braking means.

For example, the geometry of the braking means can comprise one or more of the following parameters:

- a braking radius of a disc braking system of the braking means, a radius of a wheel to which said braking means will apply the braking force, a surface of a braking piston of a braking cylinder of the breaking means, amplification ratio of the braking force generated by levers of the braking means, etc.

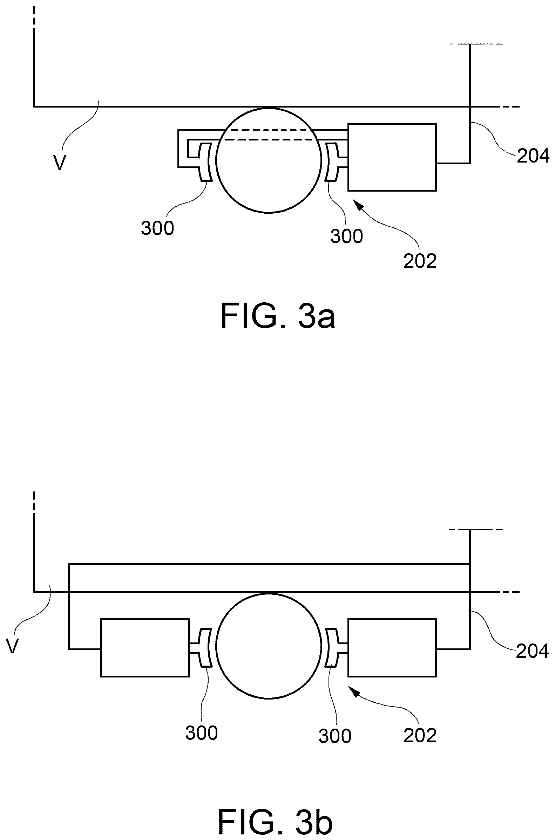

For example, the multiplicity of the braking means may comprise the number of the braking application means of the braking means. For example, as seen in Figures 3a and 3b, the braking means 202 can comprise a plurality of braking application elements 300. For example, the braking application means 300 can comprise or be at least one of: a brake pad or braking shoe, or similar (friction lining).

For example, efficiency of the braking means can signify a value indicative of the ability of the braking means to apply a braking force in light of any force losses/dispersions due to the mechanical-structural characteristics of the braking means.

Preferably, the control means 205 can further be arranged to:

- determine the value of the actuation signal 204 also as a function of an initial activation value;
- determine the real friction value between the braking means 202 and the at least one wheel or the at least one axle or the at least one disc, also depending on that initial activation value.

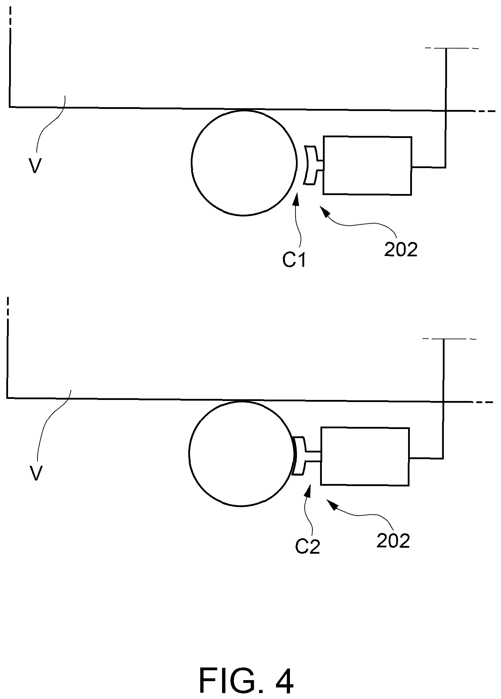

In particular, as seen for example in Figure 4, the initial activation value may have a value such that, when provided to the braking means 202, allows/causes said braking means 202 to transition from a detachment condition C1 in which they do not contact the at least one wheel or axle or disc, to a contact condition C2 in which they contact the at least one wheel or axle or disc.

Preferably, when both the characterization parameter k and the initial activation value q are provided, the control means 205 can be arranged to determine the real friction value between said braking means 202 and said at least one wheel or said at least one disc, via the following formula:

$$\mu_{\text{reale}} = \frac{m * a_{\text{inst}_{\text{reale}}} * k}{(A_{sig} - q)}$$

wherein $\mu_{\text{reale}}$ is the real friction value, m is the test mass value of that vehicle, $a_{\text{inst\_reale}}$ is the real instantaneous deceleration value, k is the characterization parameter of the braking means, $A_{sig}$ is the value of the actuation signal and q is the initial actuation value.

Clearly, the characterization parameter k can take a value equal to 1, and the initial activation value q can take a value equal to 0.

Similarly, the control means 205 can be arranged to determine the value of the actuation signal 204 via the following formula:

$$A_{sig} = \frac{m * a_{\text{test}} * k}{\mu_{pred}} + q$$

wherein $A_{sig}$ is the value of the actuation signal 204, m is the test mass value of that vehicle, $a_{\text{test}}$ is the expected instantaneous deceleration value, k is the characterization parameter, $\mu_{\text{pred}}$ is the predetermined expected friction value, and q is the initial actuation value.

Preferably, the braking means 202 can be pneumatic and the determined value of the actuation signal can be a pneumatic pressure value.

Or, the braking means 202 can be electropneumatic or electromechanical and the determined value of the actuation signal can be an electrical value.

In a further aspect, this invention also concerns a system for calibrating a braking system of at least one vehicle, particularly at least one railway vehicle.

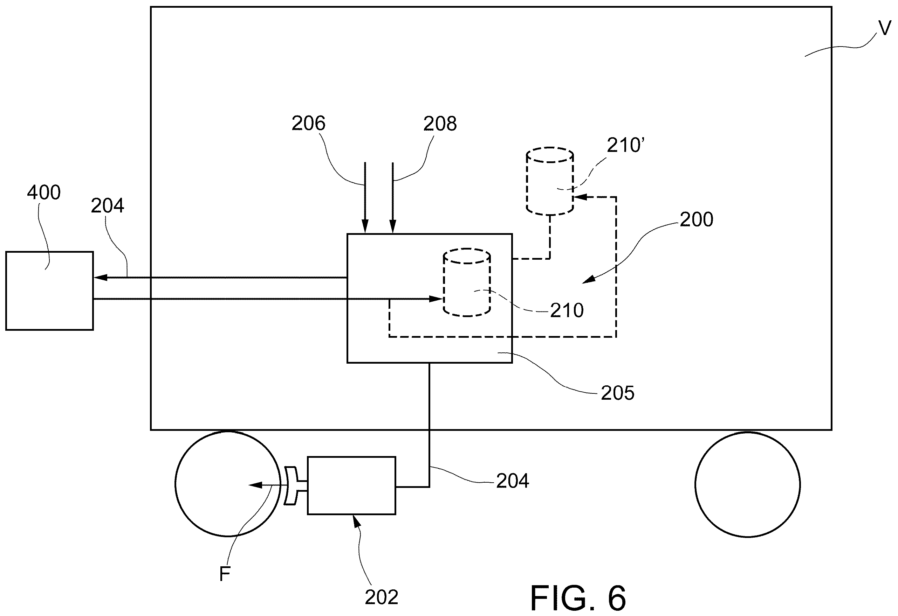

As can be seen in Figure 6, the braking system 200 again comprises braking means arranged to receive an actuation signal and apply a corresponding braking force to at least one wheel of said vehicle or at least one disc to which at least one wheel or axle of said vehicle is associated. The intensity value of the braking force applied by the braking means 202 is a function of a value of the actuation signal 204.

The braking system 200 comprises control means 205 arranged to:

- receive a test braking request 206, indicative of an expected instantaneous deceleration value;
- determine the value of said actuation signal 204 which allows said braking means 202 to apply a braking force intensity value to said at least one wheel or said at least one disc, such that at least one said vehicle would be decelerated according to said expected instantaneous deceleration value;
- actuate the braking means 202 according to the determined value of the actuation signal 204.

The control means 205 are further arranged to determine the value of said actuation signal 204 as a function of at least a predetermined expected friction value between the braking means and the at least one wheel or the at least one disc, a test mass value of at least one vehicle, and the value of said expected instantaneous deceleration.

The predetermined expected friction value between the braking means 202 and the at least one wheel or the at least one disc is arranged to be stored in storage means 210 comprised in the control means 205 of the braking system or in storage means 210' associated with the control means 205 of the braking system.

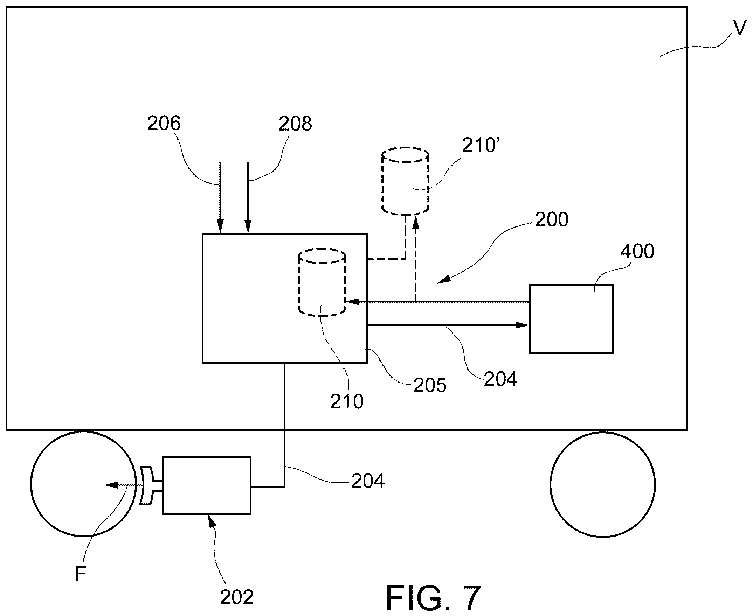

As can be seen in Figure 6 or Figure 7, the calibration system comprises calibration control means 400 arranged to be associated with the braking system 200 of at least one vehicle and receive the value of the actuation signal 204 determined by the control means of the braking system.

Preferably, the calibration control means 400 can be or comprise at least one of: a controller, a processor, a microprocessor, a microcontroller, at least one PLC, an FPGA, or the like.

The calibration control means 400 are further arranged to:

a) determine a real instantaneous deceleration value of the vehicle during actuation of the braking means 202 according to said value of the actuation signal 204;

b) determine a real friction value between the braking means and the at least one wheel or the at least one disc, depending at least on the real instantaneous deceleration value, the test mass value of that vehicle 208 and the value of the actuation signal 204;

c) replace the predetermined expected friction value stored in the storage means 210, 210' with the determined real friction value.

For example, to determine the real instantaneous deceleration value of the vehicle, the calibration control means 400 can comprise or be associated with speed sensor means (not shown in the figure) arranged to determine the actual vehicle forward speed. The speed sensor means can be or comprise, for example, at least one rotation sensor arranged to measure the rotational speed of a wheel or axle of the vehicle. Or, the calibration control means 400 can be arranged to receive actual forward speed data directly from the control means 205 of the braking system or from further control means external to the calibration system and the braking system.

With regard to the test mass value of the vehicle, the calibration control means 400 may comprise or be associated with weighing means arranged to determine the mass of the vehicle. For example, the weighing means can determine the mass of the vehicle via deformation sensor means or by monitoring the vehicle suspension. Or, the calibration control means 400 can receive the mass data directly from the control means 205 of the braking system, or from further control means external to the calibration system and the braking system. As a further alternative, the test mass value can be entered manually by a user, for example via a keyboard.

Preferably, the control means 205 of the braking system 200 can further be arranged to determine the value of the actuation signal 204 as a function of at least one predetermined test condition.

In that case, the calibration control means 400 of the calibration system can further be arranged to verify that at least one predetermined test condition is met.

The calibration control means 400 can therefore be arranged to perform the above steps a), b), and c) when the calibration control means 400 determines that said at least one predetermined test condition is met.

Preferably, the at least one predetermined test condition can be a predetermined test forward speed. In that case, the calibration control means 400 of the calibration system can comprise speed sensor means or be associated at least with speed sensor means (not shown in the figure) arranged to measure an actual forward speed. Or, the calibration control means 400 of the calibration system can be arranged to receive actual forward speed data from further control means external to the calibration system or directly from the control means 205 of the braking system. Furthermore, the calibration control means 400 of the calibration system can be arranged to determine that the predetermined test condition is met when the predetermined test forward speed and the actual forward speed substantially coincides.

Preferably, the at least one predetermined test condition can be a predetermined test adhesion value between at least one wheel of the vehicle and a running surface. In that case, the calibration control means 400 of the calibration system can comprise adhesion determination means or be associated with adhesion determination means arranged to measure an actual adhesion value. Alternatively, the calibration control means 400 of the calibration system can be arranged to receive an actual adhesion value between at least one wheel of the vehicle and a running surface by further control means external to the calibration system or directly from the control means 205 of the braking system. Furthermore, the calibration control means of the calibration system can be arranged to determine that the predetermined test condition is met when the predetermined test adhesion value and the actual adhesion value substantially coincides.

The preferred embodiments described above for the braking system 200 can find similar application for the calibration system.

By way of non-limiting example, the calibration control means 400 can be arranged to determine the real friction value between the braking means and the at least one wheel, one axle or one disc, via the following formula:

$$\mu_{\text{reale}} = \frac{m * a_{\text{inst\_reale}}}{A_{sig}}$$

wherein $\mu_{\text{reale}}$ is the real friction value, m is the test mass value of that vehicle, $a_{\text{inst\_reale}}$ is the real instantaneous deceleration value, and $A_{sig}$ is the value of the actuation signal.

Preferably, the intensity value of the braking force F converted by the braking means can be dependent on a characterization parameter specific to said braking means. The description of the characterization parameter provided above, and not repeated here, can similarly apply in this context as well.

Preferably, the calibration control means 400 can further be arranged to determine the real friction value between said braking means and said at least one wheel or said at least one disc, also depending on that initial activation value. Wherein the initial activation value can have a value such that, when provided to the braking means, allows/causes said braking means to transition from a detachment condition C1 in which they do not contact the at least one wheel or the at least one axle or the at least one disc, to a contact condition C2 in which they contact the at least one wheel or the at least one axle or at least one disc.

Preferably, when both the characterization parameter k and the initial actuation value q are present, the calibration control means 400 can be arranged to determine the real friction value between said braking means 202 and said at least one wheel or said at least one axle or the at least one said disc, via the following formula:

$$\mu_{\text{reale}} = \frac{m * a_{\text{inst}_{\text{reale}}} * k}{(A_{sig} - q)}$$

wherein $\mu_{\text{reale}}$ is the real friction value, m is the test mass value of that vehicle, $a_{\text{inst\_reale}}$ is the real instantaneous deceleration value, $A_{sig}$ is the value of the actuation signal, k is the characterization parameter and q is the initial actuation value.

For example, the calibration control means 400 of the calibration system can be arranged to cooperate with the control means 205 of the braking system. For example, the calibration system can be installed directly in the vehicle (as seen in Figure 7) or it can be external to the vehicle and connected to the braking system during calibration and can be disconnected from the braking system at the end of calibration (as seen in Figure 6).

In still further aspect, this invention relates to a method for calibrating a braking system 200 of at least one vehicle, particularly at least one railway vehicle, performed/actuated via control means.

For example, the control means can be or comprise the control means 205 of the braking system and/or the calibration control means 400 of the calibration system.

Again, the braking system 200 comprises braking means 202 arranged to receive an actuation signal 204 and apply a corresponding braking force F to at least one wheel or axle of said vehicle or at least one disc to which at least one wheel or axle of said vehicle is associated. An intensity value of the braking force applied by the braking means 202 is a function of a value of said actuation signal 204.

The calibration method comprises the steps:

- receive a test braking request 206, indicative of an expected instantaneous deceleration value;
- determine the value of the actuation signal 204 which allows the braking means 202 to apply a braking force intensity value to the at least one wheel or to the at least one axle or to the at least one disc, such that said at least one vehicle would be decelerated according to said expected instantaneous deceleration value, as a function of at least a predetermined expected friction value between said braking means and said at least one wheel or said at least one disc stored in storage means 210, 210', a test mass value of at least one vehicle, and said expected instant deceleration value;
- actuate said braking means 202 according to the determined value of the actuation signal 204.

The calibration method also comprises the steps:

a) determine a real instantaneous deceleration value of the vehicle during actuation of said braking means 202 according to the value of said actuation signal;
b) determine a real friction value between said braking means and said at least one wheel or said at least one disc, as a function of at least said real instantaneous deceleration value, the test mass value of that vehicle and said value of the actuation signal;
c) replace the predetermined expected friction value stored in the storage means 210, 210' with the determined real friction value.

Preferably, the step of determining the value of said actuation signal can also be carried out according to at least one predetermined test condition. In this case, the calibration method can also comprise the step:

- verify that said at least one predetermined test condition is met;

wherein steps a), b) and c) are performed when the verification shows that said at least one predetermined test condition is met.

As explained above, the predetermined test condition can relate to the verification of a predetermined test forward speed or predetermined test adhesion value between at least one vehicle wheel and a running surface.

The preferred embodiments described above for the braking system and the calibration system can find similar application for the calibration method.

For example, step b) can comprise determining the real friction value between the braking means and the at least one wheel or the at least one axle or the at least one disc, via the following formula:

$$\mu_{reale} = \frac{m * a_{\text{inst\_reale}}}{A_{sig}}$$

wherein $\mu_{reale}$ is the real friction value, m is the test mass value of that vehicle, $a_{\text{inst\_reale}}$ is the real instantaneous deceleration value, and $A_{sig}$ is the value of the actuation signal.

In a further example, step b) can comprise determining the real friction value between the braking means and the at least one wheel or the at least one axle or the at least one disc, via the following formula:

$$\mu_{reale} = \frac{m * a_{\text{inst}_{reale}} * k}{(A_{sig} - q)}$$

wherein $\mu_{reale}$ is the real friction value, m is the test mass value of that vehicle, $a_{\text{inst\_reale}}$ is the real instantaneous deceleration value, $A_{sig}$ is the value of the actuation signal, k is the characterization parameter and q is the initial actuation value.

The explanations provided above for the characterization parameter and the initial actuation value are similar in application and are not repeated here.

In addition, this invention also relates to a vehicle, particularly a railway vehicle. In particular, the vehicle can be for example a railway vehicle and comprise a braking system according to any of the embodiments described above.

In a further embodiment, the vehicle comprises of a braking system and a system for calibrating the braking system of at least one vehicle, according to any one of the embodiments described above.

Preferably, this invention can be particularly applicable to the sector of railway vehicles/convoys that travel on railway tracks. A convoy can be understood as a plurality of vehicles interconnected with each other. A convoy can be a train.

For example, a vehicle referred to herein can be a locomotive or a carriage, and a route/segment can comprise rails (running surface) on which the locomotive wheels roll. However, the embodiments described herein are not to be understood as limited to railway vehicles. For example, the vehicle can be a car, a truck (e.g., a highway semi-trailer, a mining truck, a logging truck, or the like), and the route can be a road or trail.

Preferably, the advantage achieved is that it has provided an automated solution for vehicle braking systems, which allows a reduction in the time required for tuning the braking parameter of braking systems relative to the friction value between the braking means and the wheel or disc associated with the wheel.

A further advantage gained is that it has provided a solution that reduces the time taken to tune the braking parameter of braking systems relative to the friction value between the braking means and the wheel or disc associated with the wheel.

Another advantage is that it has provided solutions that allow the predetermined expected friction value between the braking means and the at least one wheel or the at least one disc to be recalibrated during the operational life of the vehicle, without necessarily having to remove the vehicle from service for the intervention of a qualified operator.

According to the invention, various aspects and embodiments of a braking system, a system for calibrating a braking system of at least one vehicle, and a method for calibrating a braking system of at least one vehicle have been described. It is intended that each embodiment can be combined with any other embodiment. The invention is furthermore not limited to the described embodiments, but can be varied within the scope defined by the appended claims.

**Claims**

1. Braking system (200) for at least one vehicle (V), particularly at least one railway vehicle, wherein said braking system comprises braking means (202) arranged to receive an actuation signal (204) and to apply a corresponding braking force (F) to at least one wheel of said vehicle or at least one disc to which at least one wheel or axle of said vehicle is associated;

   wherein an intensity value of the braking force (F) applied by the braking means (202) is a function of a value of said actuation signal (204); the braking system (200) further comprising control means (205) arranged to:

   - receive a test braking request (206), indicative of an expected instantaneous deceleration value;
   - determine the value of said actuation signal (204) which allows said braking means (202) to apply, to said at least one wheel or said at least one disc, a braking force (F) having an intensity value such that said at least one vehicle would be decelerated according to said expected instantaneous deceleration value;
   - actuate said braking means (202) according to the determined value of the actuation signal (204);

   wherein said control means (205) are arranged to determine said value of said actuation signal (204) as a function of at least a predetermined expected friction value between said braking means (202) and said at least one wheel or said at least one disc, a test mass value (208) of at least one vehicle, and said expected instantaneous deceleration value;

   wherein said predetermined expected friction value between said braking means and said at least one wheel or said at least one disc, is arranged to be stored in storage means (210) comprised in the control means (205) or storage means (210') associated with said control means;

   said control means (205) being further arranged to:

   a) determine a real instantaneous deceleration value of the vehicle during actuation of the braking means (202);
   b) determine a real friction value between said braking means and said at least one wheel or said at least one disc, as a function of at least said real instantaneous deceleration value, the test mass value of that vehicle and said value of the actuation signal;
   c) replace the predetermined expected friction value stored in the storage means (210, 210') with the determined real friction value.

2. Braking system according to Claim 1, wherein said control means (205) are arranged to determine said value of the actuation signal (204) also as a function of at least one predetermined test condition;

   said control means (205) being further arranged to:

   - verify that the at least one predetermined test condition is met;

   wherein said control means (205) is arranged to perform said steps a), b), and c) when said control means (205) determines that said at least one predetermined test condition is met.

3. Braking system according to Claim 1 or 2, wherein said control means (205) are further arranged to:

   - receive a service braking request;
   - actuate said braking means (202) via an actuation signal (204) having a value determined as a function of said real friction value determined and adapted to make said braking means apply a service braking force corresponding to the received service braking request;
   and/or
   - receive an emergency braking request;
   - actuate said braking means (202) via an actuation signal (204) having a value determined as a function of said real friction value determined and adapted to make said braking means apply an emergency braking force corresponding to the received emergency braking request .

4. Braking system according to any one of the preceding claims, wherein the intensity value of the braking force (F) converted by the braking means depends on a characterization parameter specific to said braking means;
   wherein said control means (205) are further arranged to:

   - determine the value of the actuation signal as a function also of the characterization parameter of said braking means;
   - determine the real friction value between said braking means and said at least one wheel or said at least one disc, also depending on the characterization parameter specific to said braking means.

5. Braking system according to Claim 4, wherein the value of said characterization parameter of said braking means is a function of at least one of:

- a geometry of the braking means;
- a multiplicity of the braking means;
- an efficiency of the braking means.

6. Braking system according to any one of the preceding claims, wherein said control means (205) are further arranged to:

- determine the value of the actuation signal (204) further as a function of an initial activation value;
- determine the real friction value between said braking means and said at least one wheel or said at least one disc, further depending on that initial activation value;

said initial activation value having a value such that, when provided to the braking means, allows said braking means to transition from a detachment condition (C1) in which they do not contact at least one wheel or disc, to a contact condition (C2) in which they contact at least one wheel or disc.

7. Braking system according to at least Claims 4 and 6, wherein said control means (205) are arranged to determine the real friction value between said braking means (202) and said at least one wheel or said at least one disc, via the following formula:

$$\mu_{\text{reale}} = \frac{m * a_{\text{inst}_{\text{reale}}} * k}{(A_{sig} - q)}$$

wherein $\mu_{\text{reale}}$ is the real friction value, m is the test mass value of that vehicle, $a_{\text{inst\_reale}}$ is the real instantaneous deceleration value, $A_{sig}$ is the value of the actuation signal, k is the characterization parameter of the braking means and q is the initial actuation value.

8. Braking system according to any one of the preceding claims, wherein said braking means (202) are pneumatic and the determined value of the actuation signal (204) is a pneumatic pressure value.

9. Braking system according to any one of Claims 1 to 7, wherein said braking means (202) are electropneumatic or electromechanical and the determined value of the actuation signal is an electrical signal.

10. Braking system according to any one of the preceding Claims 2 to 9, wherein the at least one predetermined test condition is a predetermined test forward speed;

wherein said braking system control means (205) comprise speed sensor means (500) or are associated at least with speed sensor means (500') arranged to measure an actual forward speed;
or
wherein said braking system control means (205) are arranged to receive actual forward speed data from further control means (502) external to the braking system;
said control means (205) being arranged to determine that the predetermined test condition is met when the predetermined test forward speed and the actual forward speed are substantially coincident.

11. Braking system according to any one of Claims 2 to 10, wherein the at least one predetermined test condition is a predetermined test adhesion value between at least one wheel of the vehicle and a running surface;

wherein said control means of the braking system comprise adhesion determining means or are associated with adhesion determining means arranged to measure an actual adhesion value;
or
wherein said control means of the braking system are arranged to receive an actual adhesion value between at least one wheel of the vehicle and a running surface from further control means external to the braking system;
said control means being arranged to determine that the predetermined test condition is met when the predetermined test adhesion value and the actual adhesion value are substantially coincident.

12. System for calibrating a braking system of at least one vehicle, particularly at least one railway vehicle, wherein said braking system (200) comprises braking means (202) arranged to receive an actuation signal (204) and apply a corresponding braking force (F) to at least one wheel of said vehicle or at least one disc with which at least one wheel or axle of said vehicle is associated;

wherein an intensity value of the braking force (F) applied by the braking means (202) is a function of a value of said actuation signal (204);
the braking system also comprising control means (205) arranged to:

- receive a test braking request (206), indicative of an expected instantaneous deceleration value;
- determine the value of said actuation signal (204) which allows said braking means (202) to apply a braking force (F) intensity value to said at least one wheel or said at least one disc, such that said at least one vehicle would be decelerated according to said expected instantaneous deceleration value;
- actuate said braking means (202) according to the determined value of the actuation signal (204);

wherein said control means (205) are arranged to determine the value of said actuation signal (204) as a function of at least a predetermined expected friction value between said braking means (202), a test mass value of the at least one vehicle (208), and said expected instantaneous deceleration value;

wherein said predetermined expected friction value between said braking means (202) and said at least one wheel or said at least one disc is arranged to be stored in storage means (210) comprised in the control means (205) of the braking system or in storage means (210') associated with said control means (205) of the braking system;

said system for calibrating a braking system comprising calibration control means (400) arranged to be associated with said braking system (200) of at least one vehicle (V) and to:

- receive the value of the actuation signal (204) determined by the control means (205) of the braking system;

said calibration control means (400) further being arranged to:

a) determine a real instantaneous deceleration value of the vehicle during actuation of said braking means (200) according to said value of the actuation signal (204);
b) determine a real friction value between said braking means (202) and said at least one wheel or said at least one disc as a function of at least said real instantaneous deceleration value, the test mass value of that vehicle and said value of the actuation signal;
c) replace the predetermined expected friction value stored in the storage means (210, 210') with the determined real friction value.

13. A system for calibrating a braking system according to Claim 12, wherein said control means (205) of the braking system are arranged to determine said value of the actuation signal also as a function of at least one predetermined test condition;

wherein said calibration control means (400) of the calibration system of a braking system are further arranged to:

- verify that the at least one predetermined test condition is met;

wherein said calibration control means (400) are further arranged to perform said steps a), b), and c) when said calibration control means (400) determine that said at least one predetermined test condition is met.

14. Method for calibrating a braking system (200) of at least one vehicle (V), particularly at least one railway vehicle, performed via control means (205, 400), wherein said braking system (200) comprises braking means (202) arranged to receive an actuation signal (204) and to apply a corresponding braking force (F) to at least one wheel of said vehicle or at least one disc to which at least one wheel or axle of said vehicle is associated;

wherein an intensity value of the braking force (F) applied by the braking means (202) is a function of a value of said actuation signal (204); the method comprising the steps:

- receive a test braking request (206), indicative of an expected instantaneous deceleration value;
- determine the value of said actuation signal (204) which allows said braking means (202) to apply an intensity value of the braking force (F) to said at least one wheel or said at least one disc, such that said at least one vehicle would be decelerated according to said expected instantaneous deceleration value, as a function of at least one predetermined expected friction value between said braking means and said at least one wheel or said at least one disc stored in storage means (210, 210'), a test mass value of the at least one vehicle, and the value of said expected instantaneous deceleration;
- actuating said braking means (202) according to the determined value of the actuation signal;

the method also comprises the steps:

a) determine a real instantaneous deceleration value of the vehicle during actuation of said braking means (202) according to the value of said actuation signal;
b) determine a real friction value between said braking means (202) and said at least one wheel or said at least one disc, as a function of at least said real instantaneous deceleration value, the test mass value of that vehicle and said value of the actuation signal;
c) replace the predetermined expected friction value stored in the storage means (210, 210') with the determined real friction value.

15. Method according to Claim 14, wherein the step of determining the value of said actuation signal (204) is further carried out as a function of at least one predetermined test condition;

the method also comprising the step:

- verify that said at least one predetermined test condition is met;

wherein steps a), b) and c) are performed when the verification shows that said at least one predetermined test condition is met.

16. Vehicle, particularly a railway vehicle, comprising a braking system according to any one of Claims 1 to 11.

17. Vehicle, particularly a railway vehicle, comprising:

- a braking system;
- a system for calibrating the braking system of at least one vehicle according to either one of Claims 12 or 13.

**Patentansprüche**

1. Bremssystem (200) für mindestens ein Fahrzeug (V), insbesondere mindestens ein Schienenfahrzeug, wobei das Bremssystem Bremsmittel (202) umfasst, die eingerichtet sind, ein Betätigungssignal (204) zu empfangen und eine entsprechende Bremskraft (F) auf mindestens ein Rad des Fahrzeugs oder auf mindestens eine Scheibe auszuüben, der mindestens ein Rad oder eine Achse des Fahrzeugs zugeordnet ist;

wobei ein Intensitätswert der Bremskraft (F), die von den Bremsmitteln (202) ausgeübt wird, von einem Wert Betätigungssignals (204) abhängt; das Bremssystem (200) ferner umfassend Steuermittel (205), die eingerichtet sind, um:

- einen Testbremsanforderung (206) zu empfangen, die einen erwarteten sofortigen Verzögerungswert angibt;
- den Wert des Betätigungssignals (204) zu bestimmen, der den Bremsmitteln (202) ermöglicht, auf das mindestens eine Rad oder die mindestens eine Scheibe eine Bremskraft (F) aufweisend einen Intensitätswert auszuüben, sodass das mindestens eine Fahrzeug nach dem erwarteten sofortigen Verzögerungswert verzögert würde;
- die Bremsmittel (202) nach dem bestimmten Wert des Betätigungssignals (204) zu betätigen;

wobei die Steuermittel (205) eingerichtet sind, den Wert des Betätigungssignals (204) in Abhängigkeit von mindestens einem vorbestimmten erwarteten Reibwert zwischen den Bremsmitteln (202) und dem mindestens einen Rad oder der mindestens einen Scheibe, einem Testmassenwert (208) des mindestens einen Fahrzeugs sowie dem erwarteten sofortigen Verzögerungswert zu bestimmen;
wobei der vorbestimmte erwartete Reibwert zwischen den Bremsmitteln und dem mindestens einen Rad oder der mindestens einen Scheibe eingerichtet ist, in Speichermitteln (210), die in den Steuermitteln (205) enthalten sind, oder in Speichermitteln (210'), die den Steuermitteln zugeordnet sind, gespeichert zu werden;
wobei die Steuermittel (205) ferner eingerichtet sind, um:

a) während der Betätigung der Bremsmittel (202) einen tatsächlichen sofortigen Verzögerungswert des Fahrzeugs zu bestimmen;
b) einen tatsächlichen Reibwert zwischen den Bremsmitteln und dem mindestens einen Rad oder der mindestens einen Scheibe in Abhängigkeit von mindestens dem tatsächlichen sofortigen Verzögerungswert, dem Testmassenwert des Fahrzeugs und dem Wert des Betätigungssignals zu bestimmen;
c) den vorbestimmten erwarteten Reibwert, der in den Speichermittel (210, 210') gespeichert wird, durch den bestimmten tatsächlichen Reibwert zu ersetzen.

2. Bremssystem nach Anspruch 1, wobei die Steuermittel (205) eingerichtet sind, den Wert des Betätigungssignals (204) auch in Abhängigkeit von mindestens einer vorbestimmten Testbedingung zu bestimmen;

wobei die Steuermittel (205) eingerichtet sind, um:

- zu überprüfen, dass die mindestens eine vorbestimmte Testbedingung erfüllt wird;

wobei die Steuermittel (205) eingerichtet sind, die Schritte a), b) und c) auszuführen, wenn die Steuermittel (205) bestimmen, dass die mindestens eine vorbestimmte Testbedingung erfüllt wird.

3. Bremssystem nach Anspruch 1 oder 2, wobei die Steuermittel (205) ferner eingerichtet sind, um:

- eine Servicebremsanforderung zu empfangen;
- die Bremsmittel (202) über ein Betätigungssignal (204) aufweisend einen Wert zu betätigen, der in Abhängigkeit von dem bestimmten tatsächlichen Reibwert bestimmt wird und eingerichtet ist, die Bremsmittel zu veranlassen, eine Servicebremskraft, die der empfangenen Servicebremsanforderung entspricht, auszuüben;

und/oder

- eine Notbremsanforderung zu empfangen;
- die Bremsmittel (202) über ein Betätigungssignal (204) aufweisend einen Wert zu betätigen, der in Abhängigkeit von dem bestimmten tatsächlichen Reibwert bestimmt wird und eingerichtet ist, die Bremsmittel zu veranlassen, eine Notbremskraft, die der empfangenen Notbremsanforderung entspricht, auszuüben.

4. Bremssystem nach einem der vorhergehenden Ansprüche, wobei der Intensitätswert der Bremskraft (F), die von den Bremsmitteln umgewandelt wird, von einem Charakterisierungsparameter abhängt ,der für die Bremsmittel spezifisch ist; wobei die Steuermittel (205) ferner eingerichtet sind, um:

- den Wert des Betätigungssignals auch in Abhängigkeit von dem Charakterisierungsparameter der Bremsmittel zu bestimmen;
- den tatsächlichen Reibwert zwischen den Bremsmitteln und dem mindestens einen Rad oder der mindestens einen Scheibe ebenfalls in Abhängigkeit von dem Charakterisierungsparameter, der für die Bremsmittel spezifisch ist, zu bestimmen.

5. Bremssystem nach Anspruch 4, wobei der Wert des Charakterisierungsparameters der Bremsmittel von mindestens einem der folgenden:

- einer Geometrie der Bremsmittel;
- einer Mehrzahl der Bremsmittel;
- einem Wirkungsgrad der Bremsmittel

abhängt.

6. Bremssystem nach einem der vorhergehenden Ansprüche, wobei die Steuermittel (205) ferner eingerichtet sind, um:

- den Wert des Betätigungssignals (204) zusätzlich in Abhängigkeit von einem Anfangsbetätigungswert zu bestimmen;
- den tatsächlichen Reibwert zwischen den Bremsmitteln und dem mindestens einen Rad oder der mindestens einen Scheibe zusätzlich in Abhängigkeit von diesem Anfangsbetätigungswert zu bestimmen;

wobei der Anfangsbetätigungswert einen Wert aufweist, sodass, wenn er den Bremsmitteln bereitgestellt wird, den Bremsmitteln ermöglicht, von einem Trennungszustand (C1), in dem sie mit dem mindestens eine Rad oder der Scheibe nicht in Kontakt stehen, in einen Kontaktzustand (C2) überzugehen, in dem sie mit dem mindestens eine Rad oder der Scheibe in Kontakt stehen.

7. Bremssystem nach mindestens den Ansprüchen 4 und 6, wobei die Steuermittel (205) eingerichtet sind, den tatsächlichen Reibwert zwischen den Bremsmitteln (202) und dem mindestens einen Rad oder der mindestens einen Scheibe mittels der folgenden

Formel: $\mu_{reale} = \dfrac{m * a_{inst_{reale}} * k}{(A_{sig} - q)}$ zu bestimmen,

wobei $\mu_{reale}$ der tatsächliche Reibwert ist, m der Testmassenwert des Fahrzeugs ist, $a_{inst\_reale}$ der tatsächliche sofortige Verzögerungswert ist, $A_{sig}$ der Wert des Betätigungssignals ist, k der Charakterisierungsparameter der Bremsmittel ist und q der Anfangsbetätigungswert ist.

8. Bremssystem nach einem der vorhergehenden Ansprüche, wobei die Bremsmittel (202) pneumatisch sind und der bestimmte Wert des Betätigungssignals (204) ein pneumatischer Druckwert ist.

9. Bremssystem nach einem der Ansprüche 1 bis 7, wobei die Bremsmittel (202) elektropneumatisch oder elektromechanisch sind und der bestimmte Wert des Betätigungssignals ein elektrisches Signal ist.

10. Bremssystem nach einem der vorhergehenden Ansprüche 2 bis 9, wobei die mindestens eine vorbestimmte Testbedingung eine vorbestimmte Test-Vorwärtsgeschwindigkeit ist;

wobei die Bremssystem-Steuermittel (205) Geschwindigkeitssensormittel (500) umfassen oder mindestens den Geschwindigkeitssensormitteln (500') zugeordnet sind, die eingerichtet sind, eine tatsächliche Vorwärtsgeschwindigkeit zu messen; oder

wobei die Bremssystem-Steuermittel (205) eingerichtet sind, Daten einer tatsächlichen Vorwärtsgeschwindigkeit von weiteren Steuermittel (502) zu empfangen, die außerhalb des Bremssystems angeordnet sind;

wobei die Steuermittel (205) eingerichtet sind, zu bestimmen, dass die vorbestimmte Testbedingung erfüllt wird, wenn die vorbestimmte Test-Vorwärtsgeschwindigkeit und die tatsächliche Vorwärtsgeschwindigkeit im Wesentlichen übereinstimmen.

11. Bremssystem nach einem der Ansprüche 2 bis 10, wobei die mindestens eine vorbestimmte Testbedingung ein vorbestimmter Test-Haftungswert zwischen mindestens einem Rad des Fahrzeugs und einer Laufoberfläche ist;

wobei die Bremssystem-Steuermittel Haftungsbestimmungsmittel umfassen oder Haftungsbestimmungsmitteln zugeordnet sind, die eingerichtet sind, einen tatsächlichen Haftungswert zu messen;
oder
wobei die Bremssystem-Steuermittel eingerichtet sind, einen tatsächlichen Haftungswert zwischen mindestens einem Rad des Fahrzeugs und einer Laufoberfläche von weiteren Steuermitteln zu empfangen, die außerhalb des Bremssystems angeordnet sind;
wobei die Steuermittel eingerichtet sind, zu bestimmen, dass die vorbestimmte Testbedingung erfüllt wird, wenn der vorbestimmte Test-Haftungswert und der tatsächliche Haftungswert im Wesentlichen übereinstimmen.

12. System zum Kalibrieren eines Bremssystems von mindestens einem Fahrzeug, insbesondere mindestens einem Schienenfahrzeug, wobei das Bremssystem (200) Bremsmittel (202) umfasst, die eingerichtet sind, ein Betätigungssignal (204) zu empfangen und eine entsprechende Bremskraft (F) auf mindestens ein Rad des Fahrzeugs oder auf mindestens eine Scheibe auszuüben, dem/der mindestens ein Rad oder eine Achse des Fahrzeugs zugeordnet ist;

wobei ein Intensitätswert der Bremskraft (F), die von den Bremsmitteln (202) ausgeübt wird, von einem Wert des Betätigungssignals (204) abhängt;
das Bremssystem ferner umfassend Steuermittel (205), die eingerichtet sind, um:

- eine Testbremsanforderung (206) zu empfangen, die einen erwarteten sofortigen Verzögerungswert angibt;
- den Wert des Betätigungssignals (204) zu bestimmen, der den Bremsmitteln (202) ermöglicht, einen Bremskraft (F)-Intensitätswert auf das mindestens eine Rad oder die mindestens eine Scheibe auszuüben, sodass das mindestens eine Fahrzeug nach dem erwarteten sofortigen Verzögerungswert verzögert würde;
- die Bremsmittel (202) nach dem bestimmten Wert des Betätigungssignals (204) zu betätigen;

wobei die Steuermittel (205) eingerichtet sind, den Wert des Betätigungssignals (204) in Abhängigkeit von mindestens einem vorbestimmten erwarteten Reibwert zwischen den Bremsmitteln (202), einem Testmassenwert des mindestens einen Fahrzeugs (208) und dem erwarteten sofortigen Verzögerungswert zu bestimmen;
wobei der vorbestimmte erwartete Reibwert zwischen den Bremsmitteln (202) und dem mindestens einen Rad oder der mindestens einen Scheibe eingerichtet ist, in Speichermitteln (210), die in den Steuermitteln (205) des Bremssystems enthalten sind, oder in Speichermitteln (210'), die den Steuermitteln (205) des Bremssystems zugeordnet sind, gespeichert zu werden;
wobei das System zum Kalibrieren eines Bremssystems Kalibrierungs-Steuermittel (400) umfasst, die eingerichtet sind, dem Bremssystem (200) des mindestens einen Fahrzeugs (V) zugeordnet zu werden und um:

- den Wert des Betätigungssignals (204), das von den Steuermitteln (205) des Bremssystems bestimmt wird, zu empfangen;

wobei die Kalibrierungs-Steuermittel (400) ferner eingerichtet sind, um:

a) während der Betätigung der Bremsmittel (200) nach dem Wert des Betätigungssignals (204) einen tatsächlichen sofortigen Verzögerungswert des Fahrzeugs zu bestimmen;
b) einen tatsächlichen Reibwert zwischen den Bremsmitteln (202) und dem mindestens einen Rad oder der mindestens einen Scheibe in Abhängigkeit von mindestens dem tatsächlichen sofortigen Verzögerungswert, dem Testmassenwert des Fahrzeugs und dem Wert des Betätigungssignals zu bestimmen;
c) den vorbestimmten erwarteten Reibwert, der in den Speichermitteln (210, 210') gespeichert wird, durch den bestimmten tatsächlichen Reibwert zu ersetzen.

13. System zum Kalibrieren eines Bremssystems nach Anspruch 12, wobei die Bremssystem-Steuermittel (205) eingerichtet sind, den Wert des Betätigungssignals auch in Abhängigkeit von mindestens einer vorbestimmten Testbedingung zu bestimmen;

wobei die Kalibrierungs-Steuermittel (400) des Kalibrierungssystems eines Bremssystems ferner eingerichtet sind, um:

- zu überprüfen, dass die mindestens eine vorbestimmte Testbedingung erfüllt wird;

wobei die Kalibrierungs-Steuermittel (400) ferner eingerichtet sind, die Schritte a), b) und c) auszuführen, wenn die Kalibrierungs-Steuermittel (400) bestimmen, dass die mindestens eine vorbestimmte Testbedingung erfüllt wird.

14. Verfahren zum Kalibrieren eines Bremssystems (200) von mindestens einem Fahrzeug (V), insbesondere mindestens einem Schienenfahrzeug, das über Steuermittel (205, 400) ausgeführt wird, wobei das Bremssystem (200) Bremsmittel (202) umfasst, die eingerichtet sind, ein Betätigungssignal (204) zu empfangen und eine entsprechende Bremskraft (F) auf mindestens ein Rad des Fahrzeugs oder auf mindestens eine Scheibe auszuüben, der mindestens ein Rad oder eine Achse des Fahrzeugs zugeordnet ist;

wobei ein Intensitätswert der Bremskraft (F), die von den Bremsmitteln (202) ausgeübt wird, von einem Wert des Betätigungssignals (204) abhängt;
das Verfahren umfassend die folgenden Schritte:

- Empfangen einer Testbremsanforderung (206), die einen erwarteten sofortigen Verzögerungswert angibt;
- Bestimmen des Werts des Betätigungssignals (204), der den Bremsmitteln (202) ermöglicht, einen Intensitätswert der Bremskraft (F) auf das mindestens eine Rad oder die mindestens eine Scheibe auszuüben, sodass das mindestens eine Fahrzeug nach dem erwarteten sofortigen Verzögerungswert verzögert würde, in Abhängigkeit von mindestens einem vorbestimmten erwarteten Reibwert zwischen den Bremsmitteln und dem mindestens einen Rad oder der mindestens einen Scheibe, der in Speichermitteln (210, 210') gespeichert wird, einem Testmassenwert des mindestens einen Fahrzeugs und dem Wert des erwarteten sofortigen Verzögerungswerts;
- Betätigen der Bremsmittel (202) nach dem bestimmten Wert des Betätigungssignals;

wobei das Verfahren ferner die folgenden Schritte umfasst:

a) Bestimmen eines tatsächlichen sofortigen Verzögerungswerts des Fahrzeugs während der Betätigung der Bremsmittel (202) nach dem Wert des Betätigungssignals;
b) Bestimmen eines tatsächlichen Reibwerts zwischen den Bremsmitteln (202) und dem mindestens einen Rad oder der mindestens einen Scheibe in Abhängigkeit von mindestens dem tatsächlichen sofortigen Verzögerungswert, dem Testmassenwert des Fahrzeugs und dem Wert des Betätigungssignals;
c) Ersetzen des vorbestimmten erwarteten Reibwerts, der in den Speichermitteln (210, 210') gespeichert wird, durch den bestimmten tatsächlichen Reibwert.

15. Verfahren nach Anspruch 14, wobei der Schritt des Bestimmens des Werts des Betätigungssignals (204) ferner in Abhängigkeit von mindestens einer vorbestimmten Testbedingung ausgeführt wird;

wobei das Verfahren ferner den folgenden Schritt umfasst:

- Überprüfen, dass die mindestens eine vorbestimmte Testbedingung erfüllt wird;

wobei die Schritte a), b) und c) ausgeführt werden, wenn die Überprüfung anzeigt, dass die mindestens eine vorbestimmte Testbedingung erfüllt wird.

16. Fahrzeug, insbesondere Schienenfahrzeug, umfassend ein Bremssystem nach einem der Ansprüche 1 bis 11.

17. Fahrzeug, insbesondere Schienenfahrzeug, umfassend:

- ein Bremssystem;
- ein System zur Kalibrierung des Bremssystems von mindestens einem Fahrzeug nach einem der Ansprüche 12 oder 13.

## Revendications

1. Système de freinage (200) pour au moins un véhicule (V), en particulier au moins un véhicule ferroviaire, ledit système de freinage comprenant des moyens de freinage (202) agencés pour recevoir un signal d'actionnement (204) et pour appliquer une force de freinage correspondante (F) à au moins une roue dudit véhicule ou à au moins un disque auquel au moins une roue ou un essieu dudit véhicule est associé ;

dans lequel une valeur d'intensité de la force de freinage (F) appliquée par les moyens de freinage (202) est une fonction d'une valeur dudit signal d'actionnement (204) ;
le système de freinage (200) comprenant en outre des moyens de commande (205) agencés pour :

- recevoir une demande de freinage d'essai (206), indicative d'une valeur de décélération instantanée attendue ;
- déterminer la valeur dudit signal d'actionnement (204) qui permet auxdits moyens de freinage (202) d'appliquer, à ladite au moins une roue ou audit au moins un disque, une force de freinage (F) ayant une valeur d'intensité telle que ledit au moins un véhicule serait décéléré selon ladite valeur de décélération instantanée attendue ;
- actionner lesdits moyens de freinage (202) selon la valeur déterminée du signal d'actionnement (204) ;

dans lequel lesdits moyens de commande (205) sont agencés pour déterminer ladite valeur dudit signal d'actionnement (204) en fonction d'au moins une valeur de frottement attendue prédéterminée entre lesdits moyens de freinage (202) et ladite au moins une roue ou ledit au moins un disque, une valeur de masse d'essai (208) dudit au moins un véhicule, et ladite valeur de décélération instantanée attendue ;
dans lequel ladite valeur de frottement attendue prédéterminée entre lesdits moyens de freinage et ladite au moins une roue ou ledit au moins un disque est agencée pour être stockée dans des moyens de stockage (210) compris dans les moyens de commande (205) ou dans des moyens de stockage (210') associés auxdits moyens de commande ;
lesdits moyens de commande (205) étant en outre agencés pour :

a) déterminer une valeur de décélération instantanée réelle du véhicule pendant l'actionnement des moyens de freinage (202) ;
b) déterminer une valeur de frottement réelle entre lesdits moyens de freinage et ladite au moins une roue ou ledit au moins un disque, en fonction d'au moins ladite valeur de décélération instantanée réelle, de la valeur de masse d'essai dudit véhicule et de ladite valeur du signal d'actionnement ;
c) remplacer la valeur de frottement attendue prédéterminée stockée dans les moyens de stockage (210, 210') par la valeur de frottement réelle déterminée.

2. Système de freinage selon la revendication 1, dans lequel lesdits moyens de commande (205) sont agencés pour déterminer ladite valeur du signal d'actionnement (204) également en fonction d'au moins une condition d'essai prédéterminée ;

lesdits moyens de commande (205) étant en outre agencés pour :

- vérifier que ladite au moins une condition d'essai prédéterminée est satisfaite ;

dans lequel lesdits moyens de commande (205) sont agencés pour exécuter lesdites étapes a), b) et c) lorsque lesdits moyens de commande (205) déterminent que ladite au moins une condition d'essai prédéterminée est satisfaite.

3. Système de freinage selon la revendication 1 ou 2, dans lequel lesdits moyens de commande (205) sont en outre agencés pour :

- recevoir une demande de freinage de service ;
- actionner lesdits moyens de freinage (202) via un signal d'actionnement (204) ayant une valeur déterminée en fonction de ladite valeur de frottement réelle déterminée et adaptée pour amener lesdits moyens de freinage à appliquer une force de freinage de service correspondant à la demande de freinage de service reçue ;
et/ou
- recevoir une demande de freinage d'urgence ;
- actionner lesdits moyens de freinage (202) via un signal d'actionnement (204) ayant une valeur déterminée en fonction de ladite valeur de frottement réelle déterminée et adaptée pour amener lesdits moyens de freinage à appliquer une force de freinage d'urgence correspondant à la demande de freinage d'urgence reçue.

4. Système de freinage selon l'une quelconque des revendications précédentes, dans lequel la valeur d'intensité de la force de freinage (F) convertie par les moyens de freinage dépend d'un paramètre de caractérisation spécifique auxdits moyens de freinage ;
dans lequel lesdits moyens de commande (205) sont en outre agencés pour :

- déterminer la valeur du signal d'actionnement également en fonction du paramètre de caractérisation desdits moyens de freinage ;
- déterminer la valeur de frottement réelle entre lesdits moyens de freinage et ladite au moins une roue ou ledit au moins un disque, dépendant également du paramètre de caractérisation spécifique auxdits moyens de freinage.

5. Système de freinage selon la revendication 4, dans lequel la valeur dudit paramètre de caractérisation desdits moyens de freinage est une fonction d'au moins l'un des éléments suivants :

- une géométrie des moyens de freinage;
- une multiplicité des moyens de freinage ;
- un rendement des moyens de freinage.

6. Système de freinage selon l'une quelconque des revendications précédentes, dans lequel lesdits moyens de commande (205) sont en outre agencés pour :

- déterminer la valeur du signal d'actionnement (204) également en fonction d'une valeur d'activation initiale ;
- déterminer la valeur de frottement réelle entre lesdits moyens de freinage et ladite au moins une roue ou ledit au moins un disque, dépendant en outre de ladite valeur d'activation initiale ;

ladite valeur d'activation initiale ayant une valeur telle que, lorsqu'elle est fournie aux moyens de freinage, elle permet auxdits moyens de freinage de passer d'une condition de détachement (C1) dans laquelle ils ne sont pas en contact avec ladite au moins une roue ou ledit disque, à une condition de contact (C2) dans laquelle ils sont en contact avec ladite au moins une roue ou ledit disque.

7. Système de freinage selon au moins les revendications 4 et 6, dans lequel lesdits moyens de commande (205) sont agencés pour déterminer la valeur de frottement réelle entre lesdits moyens de freinage (202) et ladite au moins une roue ou ledit au moins un disque, au moyen de la formule suivante

$$\mu_{reale} = \frac{m * a_{inst_{reale}} * k}{(A_{sig} - q)}$$

: dans laquelle $\mu_{reale}$ est la valeur de frottement réelle, m est la valeur de masse d'essai dudit véhicule, ainst_reale est la valeur de décélération instantanée réelle, Asig est la valeur du signal d'actionnement, k est le paramètre de caractérisation des moyens de freinage et q est la valeur d'actionnement initiale.

8. Système de freinage selon l'une quelconque des revendications précédentes, dans lequel lesdits moyens de freinage (202) sont pneumatiques et la valeur déterminée du signal d'actionnement (204) est une valeur de pression pneumatique.

9. Système de freinage selon l'une quelconque des revendications 1 à 7, dans lequel lesdits moyens de freinage (202) sont électropneumatiques ou électromécaniques et la valeur déterminée du signal d'actionnement est un signal électrique.

10. Système de freinage selon l'une quelconque des revendications précédentes 2 à 9, dans lequel ladite au moins une condition d'essai prédéterminée est une vitesse d'avance d'essai prédéterminée ;

dans lequel lesdits moyens de commande (205) du système de freinage comprennent des moyens capteurs de vitesse (500) ou sont associés au moins à des moyens capteurs de vitesse (500') agencés pour mesurer une vitesse d'avance réelle ;
ou
dans lequel lesdits moyens de commande (205) du système de freinage sont agencés pour recevoir des données de vitesse d'avance réelle provenant d'autres moyens de commande (502) externes au système de freinage ;
lesdits moyens de commande (205) étant agencés pour déterminer que la condition d'essai prédéterminée est satisfaite lorsque la vitesse d'avance d'essai prédéterminée et la vitesse d'avance réelle sont sensiblement coïncidentes.

11. Système de freinage selon l'une quelconque des revendications 2 à 10, dans lequel ladite au moins une condition d'essai prédéterminée est une valeur d'adhérence d'essai prédéterminée entre au moins une roue du véhicule et une surface de roulement ;

dans lequel lesdits moyens de commande du système de freinage comprennent des moyens de détermination de l'adhérence ou sont associés à des moyens de détermination de l'adhérence agencés pour mesurer une valeur d'adhérence réelle ;
ou
dans lequel lesdits moyens de commande du système de freinage sont agencés pour recevoir une valeur d'adhérence réelle entre au moins une roue du véhicule et une surface de roulement provenant d'autres moyens de commande externes au système de freinage ;
lesdits moyens de commande étant agencés pour déterminer que la condition d'essai prédéterminée est satisfaite lorsque la valeur d'adhérence d'essai prédéterminée et la valeur d'adhérence réelle sont sensiblement coïncidentes.

**12.** Système d'étalonnage d'un système de freinage d'au moins un véhicule, en particulier d'au moins un véhicule ferroviaire, dans lequel ledit système de freinage (200) comprend des moyens de freinage (202) agencés pour recevoir un signal d'actionnement (204) et appliquer une force de freinage correspondante (F) à au moins une roue dudit véhicule ou à au moins un disque auquel au moins une roue ou un essieu dudit véhicule est associé ;

dans lequel une valeur d'intensité de la force de freinage (F) appliquée par les moyens de freinage (202) est une fonction d'une valeur dudit signal d'actionnement (204) ;

le système de freinage comprenant également des moyens de commande (205) agencés pour :

- recevoir une demande de freinage d'essai (206), indicative d'une valeur de décélération instantanée attendue ;
- déterminer la valeur dudit signal d'actionnement (204) qui permet auxdits moyens de freinage (202) d'appliquer une valeur d'intensité de force de freinage (F) à ladite au moins une roue ou audit au moins un disque, telle que ledit au moins un véhicule serait décéléré selon ladite valeur de décélération instantanée attendue ;
- actionner lesdits moyens de freinage (202) selon la valeur déterminée du signal d'actionnement (204) ;

dans lequel lesdits moyens de commande (205) sont agencés pour déterminer la valeur dudit signal d'actionnement (204) en fonction d'au moins une valeur de frottement attendue prédéterminée entre lesdits moyens de freinage (202), une valeur de masse d'essai dudit au moins un véhicule (208), et ladite valeur de décélération instantanée attendue ;

dans lequel ladite valeur de frottement attendue prédéterminée entre lesdits moyens de freinage (202) et ladite au moins une roue ou ledit au moins un disque est agencée pour être stockée dans des moyens de stockage (210) compris dans les moyens de commande (205) du système de freinage ou dans des moyens de stockage (210') associés auxdits moyens de commande (205) du système de freinage ;

ledit système d'étalonnage d'un système de freinage comprenant des moyens de commande d'étalonnage (400) agencés pour être associés audit système de freinage (200) dudit au moins un véhicule (V) et pour :

- recevoir la valeur du signal d'actionnement (204) déterminée par les moyens de commande (205) du système de freinage ;

lesdits moyens de commande d'étalonnage (400) étant en outre agencés pour :

a) déterminer une valeur de décélération instantanée réelle du véhicule pendant l'actionnement desdits moyens de freinage (200) selon ladite valeur du signal d'actionnement (204) ;
b) déterminer une valeur de frottement réelle entre lesdits moyens de freinage (202) et ladite au moins une roue ou ledit au moins un disque en fonction d'au moins ladite valeur de décélération instantanée réelle, de la valeur de masse d'essai dudit véhicule et de ladite valeur du signal d'actionnement ;
c) remplacer la valeur de frottement attendue prédéterminée stockée dans les moyens de stockage (210, 210') par la valeur de frottement réelle déterminée.

**13.** Système d'étalonnage d'un système de freinage selon la revendication 12, dans lequel lesdits moyens de commande (205) du système de freinage sont agencés pour déterminer ladite valeur du signal d'actionnement également en fonction d'au moins une condition d'essai prédéterminée ;

dans lequel lesdits moyens de commande d'étalonnage (400) du système d'étalonnage d'un système de freinage sont en outre agencés pour :

- vérifier que ladite au moins une condition d'essai prédéterminée est satisfaite ;

dans lequel lesdits moyens de commande d'étalonnage (400) sont en outre agencés pour exécuter lesdites étapes a), b) et c) lorsque lesdits moyens de commande d'étalonnage (400) déterminent que ladite au moins une condition d'essai prédéterminée est satisfaite.

**14.** Procédé d'étalonnage d'un système de freinage (200) d'au moins un véhicule (V), en particulier d'au moins un véhicule ferroviaire, mis en œuvre au moyen de moyens de commande (205, 400), dans lequel ledit système de freinage (200) comprend des moyens de freinage (202) agencés pour recevoir un signal d'actionnement (204) et pour appliquer une force de freinage correspondante (F) à au moins une roue dudit véhicule ou à au moins un disque auquel au moins une roue ou un essieu dudit véhicule est associé ;

dans lequel une valeur d'intensité de la force de freinage (F) appliquée par les moyens de freinage (202) est une fonction d'une valeur dudit signal d'actionnement (204) ;

le procédé comprenant les étapes consistant à :

- recevoir une demande de freinage d'essai (206), indicative d'une valeur de décélération instantanée attendue ;
- déterminer la valeur dudit signal d'actionnement (204) qui permet auxdits moyens de freinage (202) d'appliquer une valeur d'intensité de la force de freinage (F) à ladite au moins une roue ou audit au moins un disque, telle que ledit au moins un véhicule serait décéléré selon ladite valeur de décélération instantanée attendue, en fonction d'au moins une valeur de frottement attendue prédéterminée entre lesdits moyens de freinage et ladite au moins une roue ou ledit au moins un disque stockée dans des moyens de stockage (210, 210'), une valeur de masse d'essai dudit au moins un véhicule, et de la valeur de ladite décélération instantanée attendue ;
- actionner lesdits moyens de freinage (202) selon la valeur déterminée du signal d'actionnement ;

le procédé comprenant en outre les étapes consistant à :

a) déterminer une valeur de décélération instantanée réelle du véhicule pendant l'actionnement desdits moyens de freinage (202) selon la valeur dudit signal d'actionnement ;
b) déterminer une valeur de frottement réelle entre lesdits moyens de freinage (202) et ladite au moins une roue ou ledit au moins un disque, en fonction d'au moins ladite valeur de décélération instantanée réelle, de la valeur de masse d'essai dudit véhicule et de ladite valeur du signal d'actionnement ;
c) remplacer la valeur de frottement attendue prédéterminée stockée dans les moyens de stockage (210, 210') par la valeur de frottement réelle déterminée.

15. Procédé selon la revendication 14, dans lequel l'étape de détermination de la valeur dudit signal d'actionnement (204) est en outre réalisée en fonction d'au moins une condition d'essai prédéterminée ;

le procédé comprenant également l'étape consistant à :

- vérifier que ladite au moins une condition d'essai prédéterminée est satisfaite ;

dans lequel lesdites étapes a), b) et c) sont exécutées lorsque la vérification montre que ladite au moins une condition d'essai prédéterminée est satisfaite.

16. Véhicule, en particulier un véhicule ferroviaire, comprenant un système de freinage selon l'une quelconque des revendications 1 à 11.

17. Véhicule, en particulier un véhicule ferroviaire, comprenant :

- un système de freinage ;
- un système d'étalonnage du système de freinage d'au moins un véhicule selon l'une quelconque des revendications 12 ou 13.

FIG. 1

FIG. 2

FIG. 3a

FIG. 3b

V

C1    202

V

C2    202

# FIG. 4

FIG. 5

FIG. 6

EP 4 491 469 B1

FIG. 7

EP 4 491 469 B1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• US 2009255329 A1